# EUROPEAN PATENT SPECIFICATION

(11) **EP 1 880 608 B1**
(45) Date of publication and mention of the grant of the patent: **05.11.2008**
(21) Application number: 07012667.7
(22) Date of filing: 28.06.2007
(51) Int. Cl.: A01K 97/02

(54) **Method feeder**
Vorrichtung zum Ausbringen von Ködern in Wasser
Dispositif de dispersion d'un appât dans de l'eau

(30) Priority: 21.07.2006 GB 0614497
(43) Date of publication of application: 23.01.2008
(73) Proprietor: Drennan International Limited, Oxford, OX 2EX (GB)
(72) Inventor: Drennan, Peter John, Oxon OX44 9HG (GB)
(74) Representative: Blood, Marlon

(56) References cited:
- EP-A1- 1 080 639
- GB-A- 2 160 082
- GB-A- 2 298 115
- GB-A- 2 385 765

## Description

The present invention relates to fishing-tackle, and in particular to method feeders. A method feeder is a device which, in use, is attached to a fishing line near to the hook, and which holds bait for attracting fish to the hook.

Known types of method feeder, exemplified in EP 1080639 A1 and GB 2304018 A, comprise a structure having three radially arranged fins formed from plastics material, projecting from a weighted axial part of the structure. The method feeder is attached to a fishing line near the hook, with the line extending through the feeder (normally via a swivel connector attached to the feeder). In use, ground bait is attached to the method feeder by being pressed between and around the fins. The hook may be at least partially embedded in the ground bait, normally with hook bait (e.g. a bait pellet, or sweet corn) attached to it. When the line is cast (e.g. into a lake), the bait-loaded method feeder rests on the bottom of the lake.

Some known designs of method feeder have a single weighted fin so that each time the feeder is cast into the water it rests on the bottom of the lake with the weighted fin on the bottom. By positioning the hook on the opposite side of the method feeder to the weighted fin, the hook will be situated in an upper part of the baited feeder when the feeder is on the bottom of the lake, thereby increasing the likelihood that a fish attracted by the bait will be caught.

GB2298115 discloses a swimfeeder having a base which is weighted such that an arcuate arm, having two hook-line locators, projects upwardly.

GB2385765 discloses a method feeder having four radially extending fins in which one of the fins is weighted causing the feeder to sink in a consistent orientation.

The present invention provides a method feeder comprising at least three fins arranged in substantially radial orientations about a longitudinal axis of the feeder such that any pair of adjacent fins define therebetween a region extending around the axis in which bait may be retained, **characterised in that** at least two of the fins are weighted such that they each have a mass greater than at least one other fin, according to independent claim 1.

The invention has the advantage that by providing a method feeder with (at least) two weighted fins that each have a greater mass than (at least) one other fin of the feeder, the feeder will normally orient itself in the water when it is cast such that the two (or more) weighted fins rest on the lake bed (etc.) with the other fin(s) standing proud of the lake bed. This has the consequent advantage that if the angler positions the hook on the method feeder (e.g. in or on the bait attached to the feeder) such that it is on or adjacent to the "other" fin (or one of the "other" fins if there is more than one "other" fin), then he can generally ensure that the hook will be positioned in an upper region of the method feeder where a fish will (he hopes) be feeding, rather than on a lower side, or underside, of the feeder where it cannot easily be reached by the fish.

This solves a problem associated with the known method feeders that have either no weighted fins or only a single weighted fin. In the case of a method feeder with no weighted fins, it is a question of chance as to the position of the hook when the feeder is resting on the lake bed. In the case of a method feeder with a single weighted fin, the feeder will generally not rest only on that fin because such an orientation is unstable; instead, the method feeder will normally rest on the weighted fin and an adjacent fin, because such an orientation is much more stable. Consequently, such a known method feeder can come to rest in one of two possible orientations, and thus while the hook might be situated in an exposed region of the feeder, it has an approximately equal chance of being situated in a non-exposed region of the feeder, depending upon which orientation the feeder adopts on the lake bed.

This problem is particularly acute for the most common types of method feeders, which have only three fins; one of the two non-weighted fins will always lie on the lake bed, and the angler has no way of knowing which one it will be.

In preferred embodiments of the method feeder according to the invention, the method feeder includes at least one axial part of the feeder from which the fins project. Advantageously, the axial part of the feeder is weighted, and it is especially preferred for it to be weighted particularly towards a front end of the feeder (i.e. the end to which the hook line is attached, as described below), so that the feeder has good stability during its casting into the water.

By the term "weighted" in the context of a particular part of the method feeder is meant that the part is purposefully provided with weight (or strictly speaking, mass), by means of the material (e.g. metal) from which the part of the method feeder is formed and/or by means of the attachment of a weight as such (e.g. a metal weight) to the part of the method feeder. Thus, the weighted fins of the feeder may be weighted by means of weights separate from the fins but attached thereto, but preferably the weighted fins are weighted by means of the material forming at least part of each weighted fin having a greater density than the other fin(s). (It is also possible for the weighted fins to be weighted both by means of the material forming the fins and by means of separate weights attached thereto; but generally this is not necessary.) For example, at least part of each weighted fin may be formed from metal. At least part of the other fin(s) is/are formed from polymeric material (i.e. a plastics material), for example. Most preferably, the weighted fins are formed substantially entirely from metal, and the other fin(s) is/are formed substantially entirely from polymeric material. The (or each) "other" fin preferably is "non-weighted"; that is, each "other" fin preferably is formed from a relatively low-density material that provides relatively little weight (mass) to the method feeder compared to the weighted fins. However, in principle at least it is also possible for the (or each) "other" fin to have a significant weight (mass), and possibly even to have a weight attached to it, as long as the weight (mass) of the fin is less than that of each weighted fin, so that the method feeder still has the self-orientating bias described above. Because in principle the (or each) "other" fin could be "weighted" (as long as it is not as heavily weighted as the "weighted" fins), the "other" fin is not referred to above as being "non-weighted". However, for clarity and convenience the "other" fin(s) will be referred to below as being "non-weighted".

While the method feeder according to the invention may include four (or even more) fins, it is preferred for the feeder to include only three fins, i.e. two weighted fins and a single non-weighted fin.

In especially preferred embodiments of the invention, the two (or more) weighted fins comprise a single discrete component part of the feeder. That is, the weighted fins preferably are formed as a single integral piece. The single discrete component part preferably includes at least one axial part of the feeder from which the weighted fins project. Preferably the separate non-weighted fin(s) is/are attached to the single discrete component part, e.g. via an axial part of the discrete component part. For example, the non-weighted fin(s) may be attached to the single discrete component part by being interlocked therewith. Consequently, the axial part of the component forming the weighted fins preferably includes at least one recess in which an elongate portion of a non-weighted fin is interlocked. The non-weighted fin may include a bore for receiving a fishing line, which bore comprises at least part of a longitudinal bore of the feeder. The bore in the non-weighted fin preferably extends through the elongate portion of that fin; the elongate portion preferably is substantially tubular. Consequently, the fishing line preferably extends through a bore provided in a plastics material (from which the non-weighted fin preferably is formed) rather than extending through a long bore provided in a metal material (from which the weighted fins and the axial part preferably are formed). This is advantageous because it can substantially avoid damage to the fishing line as a result of friction with the metal.

The weighted fins of the method feeder preferably are arranged such that they are immediately angularly adjacent to each other. By "immediately angularly adjacent fins" is meant that there are no fins situated between them (i.e. in the smallest angle between the fins). For a method feeder having only three fins, this is inevitably always the case, of course. Preferably, the angular separation between two immediately angularly adjacent fins is substantially the same for all of the fins. (That is, the fins preferably are equi-angularly arranged.) Preferably, for a three fin method feeder, each fin is angularly separated from each of its neighbouring fins by approximately 120 degrees.

A preferred embodiment of the invention will now be described, by way of example, with reference to the accompanying drawings, of which:
Figure 1 (views (a) to (c)) shows an embodiment of a method feeder according to the invention; and
Figure 2 (views (a) and (b)) shows two of the main components of the method feeder illustrated in Figure 1.

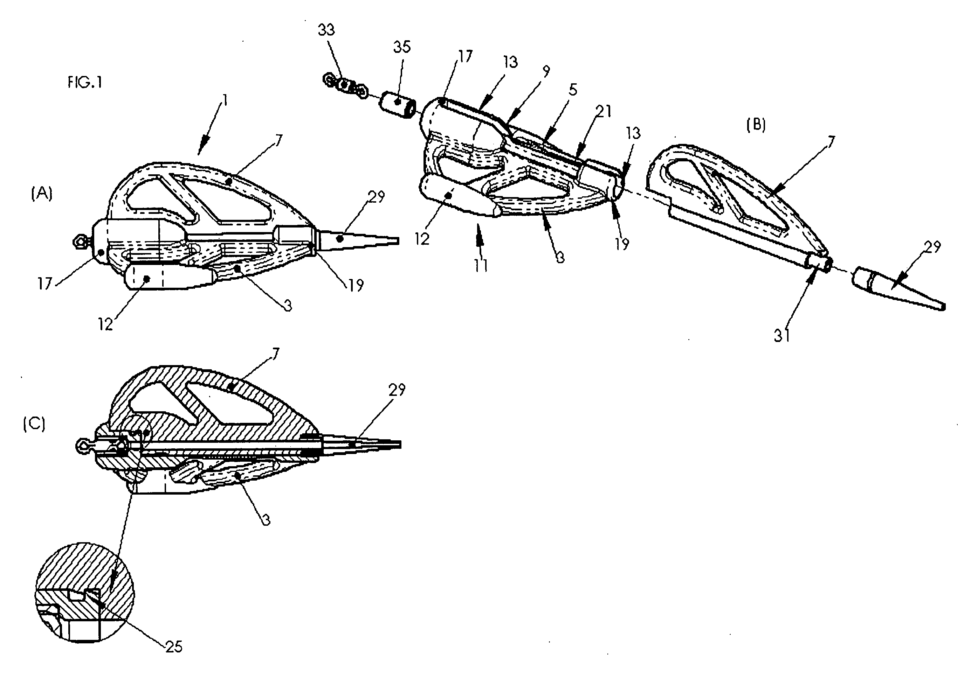

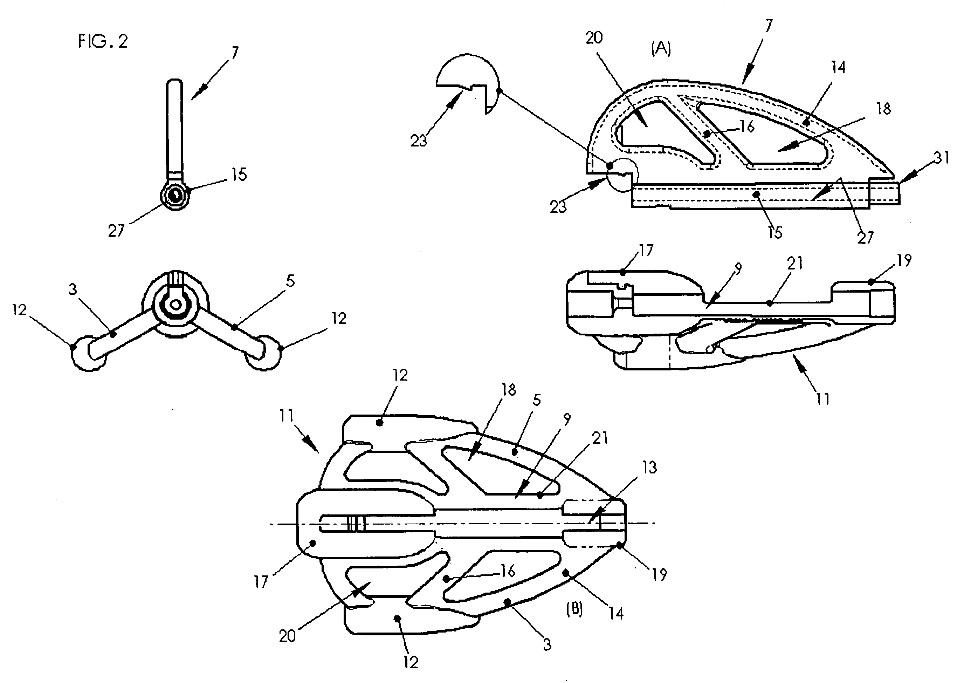

Figure 1 shows an embodiment of a method feeder according to the invention. In view (a) the method feeder is shown assembled; in view (b) it is shown in an exploded diagram; and in view (c) it is shown in longitudinal cross-section. Figure 2 shows two of the main components of the method feeder illustrated in Figure 1. The method feeder 1 includes three fins. Two of the fins 3 and 5 are weighted such that they each have a greater mass than the other fin 7, which is non-weighted. The two weighted fins 3 and 5, together with an axial part 9 from which they project, comprise a single discrete component part 11 of the feeder. The integral component part 11 is formed from metal, and it is this which makes the fins 3 and 5 weighted. The non-weighted fin 7 is formed from a plastics material, which has a significantly lower density than that of the metal. Because all of the fins are substantially the same size, the weighted fins 3 and 5 each have a greater mass than the non-weighted fin 7. Additionally, each of the weighted fins 3 and 5 includes an integral weight part 12, which comprises a bulbous part of each of these fins, to increase their mass still further. (As explained above, such weight parts could be omitted or they could be provided by separate weights attached to the fins 3 and 5, for example.) In the illustrated embodiment, each of the three fins 3, 5 and 7 comprises a curved elongate portion 14 and a central strut portion 16, such that two openings 18 and 20 are provided between the elongate portion and the strut portion. Other fin designs can be used, although it is generally preferred for each fin to include at least one opening, to aid the attachment of ground bait to the method feeder in use.

The separate non-weighted fin 7 is attached to the component part 11 via the axial part 9, with which it is interlocked. For this purpose, the axial part 9 includes a longitudinal recess 13 in which a longitudinal tubular portion 15 of the non-weighted fin 7 is interlocked. In particular, the axial part 9 includes a front part 17 and a back part 19 integrally joined by a middle part 21, and the longitudinal recess 13 extends from the front part, via the middle part, to the back part. In the front part 17 and the back part 19 the recess has a generally "key-hole" shaped cross-section, so that the tubular portion 15 of the non-weighted fin 7 is trapped within the recess. The non-weighted fin 7 cannot be removed from the component part 11 because a protrusion 23 on the fin 7 is engaged with a depression 25 in the recess 13 in the front part 17 to prevent the fin 7 from sliding out of the recess from the back part 19. During the manufacturing of the method feeder 1, the non-weighted fin 7 is slid into the recess 13 from the open back part 19 until the protrusion 23 engages with the depression 25, and the fin 7 cannot thereafter be removed from the recess. The method feeder is supplied with the non-weighted fin 7 already irreversibly attached to the component part 11.

The tubular portion 15 of the non-weighted fin 7 includes a bore 27 for receiving a fishing line (not illustrated), which bore comprises part of a longitudinal bore of the method feeder 1. The method feeder 1 is attached to a fishing line by the line being threaded into the bore 27 via a tapered flexible tube 29 fitted on a protruding back end 31 of the tubular portion 15 of the non-weighted fin 7. The end of the fishing line is attached to one side of a swivel connector 33 which fits into the front part 17 of the component part 11 and is retained in place by a rubber-like tube 35 that surrounds the swivel connector. A short length of line is attached to the other side of the swivel connector 33, and a hook is attached to the opposite end of the short length of line.

In use, the method feeder is attached to a fishing line which itself is attached to fishing rod, and the fishing line extends through the tapered flexible tube 29 and through the bore 27, and is attached to the swivel connector 33. A separate short length of line is attached to the other side of the swivel connector 33, and a hook is attached to the opposite end of the short length of line. Ground bait is attached to the method feeder by being pressed between and around the fins 3, 5 and 7. The hook is at least partially embedded in the ground bait, next to, or on top of, the non-weighted fin 7. The hook will normally have hook bait (e.g. a bait pellet, or sweet corn) attached to it. Whenever the line is cast (e.g. into a lake), the bait-loaded method feeder substantially always rests on the bottom of the lake with the two weighted fins 3 and 5 lying on the lake bed, and with the non-weighted fin upright. Consequently, the hook is substantially always in an upper part of the bait-loaded method feeder when the feeder is on the lake bed, thereby increasing the likelihood that a fish attracted by the bait will be caught.

## Claims

1. A method feeder comprising at least three fins (3,5,7) arranged In substantially radial orientations about a longitudinal axis of the feeder such that any pair of adjacent fins define therebetween a region extending around the axis in which bait may be retained, **characterised in that** at least two of the fins (3,5) are weighted such that they each have a mass greater than at least one other fin (7).

2. A method feeder according to Claim 1, including at least one axial part of the feeder from which the fins project.

3. A method feeder according to any preceding claim, in which the weighted fins (3,5) are weighted by means of weights separate from the fins but attached thereto.

4. A method feeder according to any preceding claim, in which the weighted fins (3,5) are weighted by means of at least part of each weighted fin having a greater density than said other fin(s) (7).

5. A method feeder according to any preceding claim, in which at least part of each weighted (3,5) fin is formed from metal.

6. A method feeder according to any preceding claim, in which at least part of said other fin(s) (7) is/are formed from polymeric material.

7. A method feeder according to any preceding claim, in which said at least two weighted fins (3,5) comprise a single discrete component (11) part of the feeder.

8. A method feeder according to Claim 7, in which the single discrete component part (11) includes an axial part (9) of the feeder from which the weighted fins (3,5) project.

9. A method feeder according to Claim 7 or Claim 8, in which said other fin(s) (7) is/are attached to the single discrete component part (11).

10. A method feeder according to Claim 9 when dependent upon Claim 8, in which said other fin(s) (7) is/are attached to the axial part (9) of the single discrete component part (11).

11. A method feeder according to Claim 9 or Claim 10, in which said other fin(s) (7) is/are attached to the single discrete component part (11) by being interlocked therewith.

12. A method feeder according to Claim 11, in which the axial part (9) of the single discrete component (11) includes at least one recess (13) In which an elongate portion (15) of a said other fin (7) is interlocked.

13. A method feeder according to any preceding claim, in which a said other fin (7) includes a bore (27) for receiving a fishing line, which bore comprises at least part of a longitudinal bore of the feeder.

14. A method feeder according to Claim 13 when dependent upon Claim 12, in which the bore (2) in said other fin (7) extends through the elongate portion (15) of that fin.

15. A method feeder according to any preceding claim, in which the weighted fins (3,5) are arranged such that they are immediately angularly adjacent to each other.

16. A method feeder according to any preceding claim, which has only three fins (3,5,7), two (3,5) of which are weighted such that they each have a greater mass than the other fin (7).

17. A method feeder according to any preceding claim, in which the angular separation between two immediately angularly adjacent fins is substantially the same for all of the fins (3,5,7).

18. A method feeder according to any preceding claim, in which said other fin(s) (7) is/are non-weighted.

## Patentansprüche

1. Grundangelvorrichtung, umfassend wenigstens drei Flossen (3, 5, 7), die in im Wesentlichen radialen Ausrichtungen um eine Längsachse der Grundangelvorrichtung angeordnet sind, so dass jedes beliebige Paar benachbarter Flossen zwischen sich eine um die Achse verlaufende Region definiert, in welcher Köder aufgenommen werden kann, **dadurch gekennzeichnet, dass** wenigstens zwei der Flossen (3, 5) beschwert sind, so dass sie jeweils eine größere Masse als wenigstens eine andere Flosse (7) haben.

2. Grundangelvorrichtung nach Anspruch 1, die wenigstens einen axialen Teil der Grundangelvorrichtung aufweist, von der die Flossen vorspringen.

3. Grundangelvorrichtung nach einem der vorhergehenden Ansprüche, bei der die beschwerten Flossen (3, 5) mit Gewichten beschwert sind, die von den Flossen separat, aber daran angebracht sind.

4. Grundangelvorrichtung nach einem der vorhergehenden Ansprüche, bei der die beschwerten Flossen (3, 5) **dadurch** beschwert sind, dass wenigstens ein Teil jeder beschwerten Flosse eine größere Dichte als die genannte(n) andere(n) Flosse(n) (7) hat.

5. Grundangelvorrichtung nach einem der vorhergehenden Ansprüche, bei der wenigstens ein Teil jeder beschwerten (3, 5) Flosse aus Metall hergestellt ist.

6. Grundangelvorrichtung nach einem der vorhergehenden Ansprüche, bei der wenigstens ein Teil der genannten anderen Flosse(n) (7) aus polymerem Material hergestellt ist.

7. Grundangelvorrichtung nach einem der vorhergehenden Ansprüche, bei der die genannten wenigstens zwei beschwerten Flossen (3, 5) einen einzelnen diskreten Einzelteil (11) der Grundangelvorrichtung umfassen.

8. Grundangelvorrichtung nach Anspruch 7, bei der der einzelne diskrete Einzelteil (11) einen axialen Teil (9) der Grundangelvorrichtung beinhaltet, von dem die beschwerten Flossen (3, 5) vorspringen.

9. Grundangelvorrichtung nach Anspruch 7 oder Anspruch 8, bei der die genannte(n) andere(n) Flosse(n) (7) an dem einzelnen diskreten Einzelteil (11) angebracht ist/sind.

10. Grundangelvorrichtung nach Anspruch 9, wenn abhängig von Anspruch 8, bei der die genannte(n) andere(n) Flosse(n) (7) an dem axialen Teil (9) des einzelnen diskreten Einzelteils (11) angebracht ist/sind.

11. Grundangelvorrichtung nach Anspruch 9 oder Anspruch 10, bei der die genannte(n) andere(n) Flosse(n) (7) **dadurch** an dem einzelnen diskreten Einzelteil (11) angebracht ist/sind, dass sie damit verriegelt ist/sind.

12. Grundangelvorrichtung nach Anspruch 11, bei der der axiale Teil (9) des einzelnen diskreten Einzelteils (11) wenigstens eine Aussparung (13) aufweist, in welcher ein länglicher Teil (15) der genannten anderen Flosse (7) verriegelt ist.

13. Grundangelvorrichtung nach einem der vorhergehenden Ansprüche, bei der eine genannte andere Flosse (7) eine Bohrung (27) zum Aufnehmen einer Angelschnur aufweist, wobei diese Bohrung wenigstens einen Teil einer Längsbohrung der Grundangelvorrichtung umfasst.

14. Grundangelvorrichtung nach Anspruch 13, wenn abhängig von Anspruch 12, bei der die Bohrung (2) in der genannten anderen Flosse (7) durch den länglichen Teil (15) dieser Flosse verläuft.

15. Grundangelvorrichtung nach einem der vorhergehenden Ansprüche, bei der die beschwerten Flossen (3, 5) so angeordnet sind, dass sie unmittelbar winklig nebeneinander liegen.

16. Grundangelvorrichtung nach einem der vorhergehenden Ansprüche, die nur drei Flossen (3, 5, 7) hat, von denen zwei (3, 5) so beschwert sind, dass sie jeweils eine größere Masse als die andere Flosse (7) haben.

17. Grundangelvorrichtung nach einem der vorhergehenden Ansprüche, bei der die Winkeltrennung zwischen zwei unmittelbar winklig nebeneinander liegenden Flossen im Wesentlichen für alle Flossen (3, 5, 7) gleich ist.

18. Grundangelvorrichtung nach einem der vorhergehenden Ansprüche, bei der die genannte(n) andere(n) Flosse(n) nicht beschwert ist/sind.

## Revendications

1. Amorçoir de pêche comprenant au moins trois ailettes (3,5,7) disposées en des orientations sensiblement radiales autour d'un axe longitudinal de l'amorçoir de pêche, de sorte que chaque paire d'ailettes adjacentes délimitent entre elles une région qui s'étend autour de l'axe, dans laquelle une amorce peut être retenue, **caractérisé en ce qu'**au moins deux des ailettes (3,5) sont lestées de sorte à ce que chacune possède une masse supérieure à celle d'au moins une autre ailette (7).

2. Amorçoir de pêche selon la revendication 1, qui comprend au moins une partie axiale de l'amorçoir de pêche depuis laquelle les ailettes font saillie.

3. Amorçoir de pêche selon l'une quelconque des revendications précédentes, dans lequel les ailettes lestées (3,5) sont lestées au moyen de poids non solidaires des ailettes, mais attachés à celles-ci.

4. Amorçoir de pêche selon l'une quelconque des revendications précédentes, dans lequel les ailettes lestées (3,5) sont lestées en conférant à au moins une partie de chaque ailette lestée une densité supérieure à celle de ladite autre ailette ou de chacune desdites autres ailettes (7).

5. Amorçoir de pêche selon l'une quelconque des revendications précédentes, dans lequel une partie au moins de chaque ailette lestée (3,5) est formée en métal.

6. Amorçoir de pêche selon l'une quelconque des revendications précédentes, dans lequel une partie au moins de ladite autre ailette ou de chacune desdites autres ailettes (7) est formée en une matière polymérique.

7. Amorçoir de pêche selon l'une quelconque des revendications précédentes, dans lequel lesdites au moins deux ailettes lestées (3,5) comprennent un seul élément constitutif discret (11) de l'amorçoir de pêche.

8. Amorçoir de pêche selon la revendication 7, dans lequel le seul élément constitutif discret (11) comprend une partie axiale (9) de l'amorçoir de pêche depuis laquelle les ailettes lestées (3,5) font saillie.

9. Amorçoir de pêche selon la revendication 7 ou la revendication 8, dans lequel ladite autre ailette ou chaque autre ailette (7) est attachée au seul élément constitutif discret (11).

10. Amorçoir de pêche selon la revendication 9 lorsque dépendante de la revendication 8, dans lequel ladite autre ailette ou chaque autre ailette (7) est attachée à la partie axiale (9) du seul élément constitutif discret (11).

11. Amorçoir de pêche selon la revendication 9 ou la revendication 10, dans lequel ladite autre ailette ou chaque autre ailette (7) est attachée au seul élément constitutif discret (11) par verrouillage réciproque avec celui-ci.

12. Amorçoir de pêche selon la revendication 11, dans lequel la partie axiale (9) du seul élément constitutif discret (11) comprend au moins un évidement (13) dans lequel une partie allongée (15) d'une dite autre ailette (7) est fixée par verrouillage réciproque.

13. Amorçoir de pêche selon l'une quelconque des revendications précédentes, dans lequel une dite autre ailette (7) comprend un alésage (27) pour recevoir une ligne de pêche, cet alésage comprenant au moins une partie d'un alésage longitudinal de l'amorçoir de pêche.

14. Amorçoir de pêche selon la revendication 13 lorsque dépendante de la revendication 12, dans lequel l'alésage (2) percé dans ladite autre ailette (7) se prolonge à travers la partie allongée (15) de cette ailette.

15. Amorçoir de pêche selon l'une quelconque des revendications précédentes, dans lequel les ailettes lestées (3,5) sont disposées de telle sorte qu'elles sont immédiatement angulairement adjacentes l'une à l'autre.

16. Amorçoir de pêche selon l'une quelconque des revendications précédentes, qui ne possède que trois ailettes (3,5,7) dont deux (3,5) sont lestées de sorte à avoir chacune une masse supérieure à celle de l'autre ailette (7).

17. Amorçoir de pêche selon l'une quelconque des revendications précédentes, dans lequel la séparation angulaire entre deux ailettes immédiatement angulairement adjacentes est sensiblement égale pour toutes les ailettes (3,5,7).

18. Amorçoir de pêche selon l'une quelconque des revendications précédentes, dans lequel ladite autre ailette ou chaque autre ailette (7) n'est pas lestée.
